# EUROPEAN PATENT APPLICATION

(11) **EP 4 629 719 A1**
(43) Date of publication of application: **08.10.2025**
(21) Application number: 22966967.6
(22) Date of filing: 02.12.2022
(51) Int. Cl.: H04W 68/00, H04W 52/02, H04B 1/00

(54) **METHOD AND APPARATUS FOR TRANSMITTING PAGING MESSAGE, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2022/136365
(87) International publication number: WO 2024/113381

(57) **Abstract**

The present disclosure relates to a method and apparatus for transmitting a paging message, and a readable storage medium. The method comprises: within a first time period of an extended discontinuous reception (e-DRX) cycle, monitoring a low-power wake-up signal (LP WUS) by means of a low-power receiver; and after the LP WUS is received, a main receiver changing from a sleep state to a working state, and monitoring a paging occasion (PO) corresponding to a user equipment. In the method of the present disclosure, within the e-DRX cycle, the user equipment can monitor the LP WUS by using the low-power receiver, and can awaken the main receiver after the LP WUS is detected, such that the main receiver monitors the corresponding PO, so as to monitor a paging message. Before the LP WUS is detected, the main receiver can remain in the sleep state, such that the energy consumption of the user equipment in an e-DRX scenario is further reduced on the basis of an LP WUS mechanism.

## Description

### TECHNICAL FIELD

The present disclosure relates to the field of wireless communication technologies, and in particular to a method and an apparatus for transmitting a paging message as well as a readable storage medium.

### BACKGROUND

In order to reduce the power consumption of user equipment (UE) during communication, 3GPP defines extended discontinuous reception (eDRX) for idle UE. When the eDRX cycle is configured, UE monitors the paging opportunity (PO) corresponding to the UE in the paging time window (PTW) of the eDRX cycle. In the scenario where eDRX is configured, how to further achieve energy saving of UE is a problem that needs to be solved.

### SUMMARY

The present disclosure provides a method and an apparatus for transmitting a paging message as well as a readable storage medium.

According to a first aspect, the present disclosure provides a method for monitoring a paging message, which is performed by user equipment (UE) and includes:
monitoring, in a first time period of an extended discontinuous reception e-DRX cycle, low power wake up signal LP WUS through a low power receiver; and
monitoring a paging opportunity PO corresponding to the UE through a main receiver switched, after receiving the LP WUS, from a sleep state to an active state.

According to the method disclosed herein, during the e-DRX cycle, the UE can monitor LP WUS by using the low power receiver and, after the LP WUS is detected, wake up the main receiver to monitor the corresponding PO for detecting the paging message. Before the LP WUS is detected, the main receiver can remain in a sleep state, thereby further saving the energy consumption of UE in the e-DRX scenario in combination with the LP WUS mechanism.

In some possible embodiments, the first time period includes: a time period corresponding to a paging time window PTW in the e-DRX cycle.

In some possible embodiments, the first time period includes: a whole duration of the e-DRX cycle.

In some possible embodiments, the first time period includes: a time period corresponding to a PTW and a time period corresponding to at least one monitoring window, wherein the monitoring window is configured for monitoring the LP WUS.

In some possible embodiments, the at least one monitoring window is located in a time period of the e-DRX cycle outside the PTW.

In some possible embodiments, the method further includes:
not monitoring the LP WUS and/or the PO in any time period of the e-DRX cycle other than the first time period.

In some possible embodiments, the method further includes:
receiving configuration information sent by a network device, wherein the configuration information is used for configuring the at least one monitoring window.

In some possible embodiments, the configuration information includes at least one of following:
a start time of the at least one monitoring window;
a duration of the at least one monitoring window;
a number of monitoring windows.

In some possible embodiments, monitoring the PO corresponding to the UE includes:
if the UE does not receive a corresponding paging message for a preset duration after receiving the LP WUS, causing the main receiver to enter the sleep state and monitoring the LP WUS through the low power receiver.

According to a second aspect, the present disclosure provides a method for sending a paging message, which is performed by a network device and includes:
sending, in a first time period of an extended discontinuous reception e-DRX cycle, low power wake up signal LP WUS to user equipment UE before sending the paging message.

According to the method disclosed herein, during the e-DRX cycle, the network device sends LP WUS before sending a paging message. The UE can monitor LP WUS by using the low power receiver and, before the LP WUS is detected, the main receiver can remain in a sleep state, thereby further saving the energy consumption of UE in the e-DRX scenario in combination with the LP WUS mechanism.

In some possible embodiments, the method further includes:
not sending the LP WUS and/or the paging information in any time period of the e-DRX cycle other than the first time period.

In some possible embodiments, the first time period includes one of following:
a whole duration of the e-DRX cycle;
a time period corresponding to a paging time window PTW in the e-DRX cycle;
a time period corresponding to the PTW and a time period corresponding to at least one monitoring window, wherein the monitoring window is configured for monitoring the LP WUS.

In some possible embodiments, the at least one monitoring window is located in a time period of the e-DRX cycle outside the PTW.

In some possible embodiments, the method further includes:
sending configuration information to the UE, wherein the configuration information is used for configuring the at least one monitoring window.

In some possible embodiments, the configuration information includes at least one of following:
a start time of the at least one monitoring window;
a duration of the at least one monitoring window;
a number of monitoring windows.

According to a third aspect, the present disclosure provides an apparatus for monitoring a paging message. The apparatus may be configured to implement the step(s) performed by UE according to the first aspect or any possible design thereof. The UE may implement the functions according to the above methods in the form of a hardware structure, a software module, or a hardware structure plus a software module.

When the apparatus according to the third aspect is implemented by a software module, the apparatus may include a transceiver module and a processing module coupled to each other, wherein the transceiver module can be configured to support communication of a communication device, and the processing module can be configured for the communication device to perform processing operations, such as generating information/messages to be sent, or processing received signals to obtain information/messages.

When implementing the steps described in the first aspect above, the transceiver module is configured to monitor, in a first time period of an extended discontinuous reception e-DRX cycle, low power wake up signal LP WUS through a low power receiver; and
the processing module is configured to monitor a paging opportunity PO corresponding to the UE through a main receiver switched, after receiving the LP WUS, from a sleep state to an active state.

According to a fourth aspect, the present disclosure provides an apparatus for sending a paging message. The apparatus may be configured to implement the step(s) performed by the network device according to the second aspect or any possible design thereof. The network device may implement the functions according to the above methods in the form of a hardware structure, a software module, or a hardware structure plus a software module.

When the apparatus according to the fourth aspect is implemented by a software module, the apparatus may include a transceiver module, wherein the transceiver module can be configured to support communication of a communication device.

When implementing the steps described in the second aspect above, the transceiver module is configured to send, in a first time period of an e-DRX cycle, LP WUS to UE before sending the paging message.

According to a fifth aspect, the present disclosure provides a communication device, including a processor and a memory; wherein the memory is configured to store a computer program; and the processor is configured to execute the computer program to implement the first aspect or any possible design thereof.

According to a sixth aspect, the present disclosure provides a communication device, including a processor and a memory; wherein the memory is configured to store a computer program; and the processor is configured to execute the computer program to implement the second aspect or any possible design thereof.

According to a seventh aspect, the present disclosure provides a computer-readable storage medium storing thereon instructions (or computer programs, programs) which, upon being called and executed on a computer, cause the computer to implement the foregoing first aspect or any possible design thereof.

According to an eighth aspect, the present disclosure provides a computer-readable storage medium storing thereon instructions (or computer programs, programs) which, upon being called and executed on a computer, cause the computer to implement the foregoing second aspect or any possible design thereof.

It is to be understood that the foregoing general description and the following detailed description are exemplary and explanatory only and are not restrictive of the present disclosure.

### BRIEF DESCRIPTION OF THE DRAWINGS

The drawings described herein are used to provide a further understanding of the embodiments of the present disclosure and constitute a part of this application. The illustrative example according to the embodiments of the present disclosure and their descriptions are used to explain the embodiments of the present disclosure and do not constitute an improper limitation on the embodiments of the present disclosure in the drawings.

The accompanying drawings herein are incorporated in and constitute a part of the specification, illustrate embodiments consistent with the embodiments of the present disclosure, and together with the description, serve to explain the principles of the embodiments of the present disclosure.
FIG. 1 is a schematic diagram of a wireless communication system architecture according to an embodiment of the present disclosure.
FIG. 2 is a flow chart of a method for transmitting a paging message according to an exemplary embodiment.
FIG. 3 is a flow chart of a method for monitoring a paging message according to an exemplary embodiment.
FIG. 4 is a flow chart of another method for monitoring a paging message according to an exemplary embodiment.
FIG. 5 is a flow chart of another method for monitoring a paging message according to an exemplary embodiment.
FIG. 6 is a flow chart of another method for monitoring a paging message according to an exemplary embodiment.
FIG. 7 is a schematic diagram of a first time period according to an exemplary embodiment.
FIG. 8 is a flow chart of a method for sending a paging message according to an exemplary embodiment.
FIG. 9 is a block diagram of an apparatus for monitoring a paging message according to an exemplary embodiment.
FIG. 10 is a block diagram of UE according to an exemplary embodiment.
FIG. 11 is a block diagram of an apparatus for sending a paging message according to an exemplary embodiment.
FIG. 12 is a block diagram of a communication device according to an exemplary embodiment.

### DETAILED DESCRIPTION

Embodiments of the present disclosure are now further described in conjunction with the accompanying drawings and specific implementation manners.

Exemplary embodiments will be described in detail herein, examples of which are shown in the accompanying drawings. When the following description refers to the drawings, unless otherwise indicated, the same numbers in different drawings represent the same or similar elements. The implementations described in the following exemplary embodiments do not represent all implementations consistent with the embodiments of the present disclosure. Instead, they are merely examples of apparatuses and methods consistent with some aspects of the present disclosure as detailed in the appended claims.

The terms used according to some embodiments of this disclosures are only for the purpose of describing specific embodiments and are not intended to limit the disclosed embodiments. The singular forms of "a" and "the" used according to some embodiments of this disclosures and the appended claims are also intended to include plural forms unless the context clearly indicates other meanings. It should also be understood that the term "and/or" used herein refers to and includes any or all possible combinations of one or more associated items as listed.

It should be understood that although the terms "first", "second", "third", etc. may be used to describe various information according to some embodiments of this disclosures, such information should not be limited to these terms. These terms are only used to distinguish the same type of information from each other. For example, without departing from the scope of the disclosed embodiments, the first information may also be referred to as the second information, and similarly, the second information may also be referred to as the first information. Depending on the context, the words "if" and "in case" as used herein may be interpreted as "when" or "while" or "in response to determining..."

Embodiments of the present disclosure are described in detail below, examples of which are shown in the accompanying drawings, where the same or similar reference numerals throughout represent the same or similar elements. The embodiments described below with reference to the accompanying drawings are exemplary and are intended to be used to explain the present disclosure, and should not be construed as limiting the present disclosure.

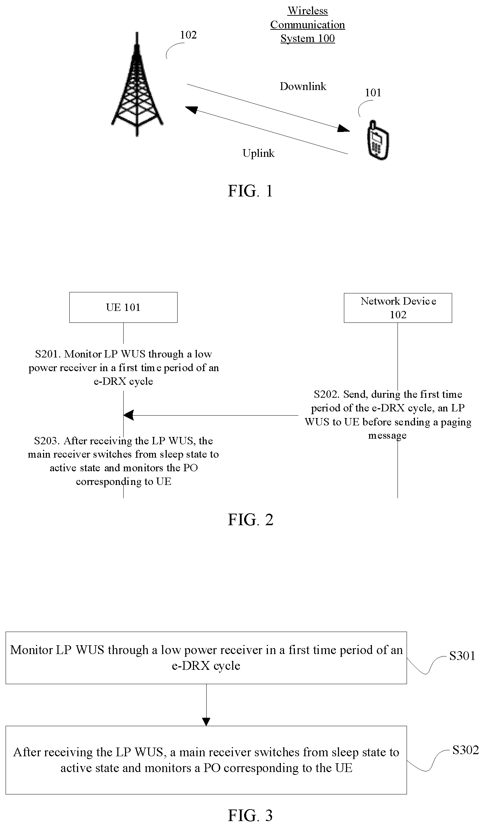

As shown in FIG. 1, a method for transmitting a paging message according to an embodiment of the present disclosure may be applied to a wireless communication system 100, which may include UE 101 and a network device 102. The UE 101 is configured to support carrier aggregation and may be connected to multiple carrier components of the network device 102, including a primary carrier component and one or more secondary carrier components.

It should be understood that the above wireless communication system 100 can be applied to both low-frequency scenarios and high-frequency scenarios. Application scenarios of the wireless communication system 100 include, but are not limited to, long term evolution (LTE) system, LTE frequency division duplex (FDD) system, LTE time division duplex (TDD) system, worldwide interoperability for microwave access (WiMAX) communication system, cloud radio access network (CRAN) system, future fifth-generation (5G) system, new radio (NR) communication system, or future evolved public land mobile network (PLMN) system.

The UE 101 shown above may be a terminal, an access terminal, a terminal unit, a terminal station, a mobile station (MS), a remote station, a remote terminal, a mobile terminal, a wireless communication device, a terminal agent, a terminal device, or the like. The UE 101 may have a wireless transceiver function, and it can perform communication (e.g., wireless communication) with one or more network devices in one or more communication systems and receive network services provided by the network devices, where the network devices include but are not limited to the network device 102 shown in the drawings.

Here, the UE 101 can be a cellular phone, a cordless phone, a session initiation protocol (SIP) phone, a wireless local loop (WLL) station, a personal digital assistant (PDA) device, a handheld device with wireless communication function, a computing device or other processing device connected to a wireless modem, a vehicle-mounted device, a wearable device, a terminal device in a future 5G network, a terminal device in a future evolved PLMN network, or the like.

The network device 102 may be an access network device (or access network point). Here, the access network device refers to a device that provides network access functions, such as a radio access network (RAN) base station, or the like. The network device 102 may specifically include a base station (BS), or a base station and a wireless resource management device for controlling the base station, or the like. The network device 102 may also include a relay station (relay device), an access point, a base station in a future 5G network, a base station in a future evolved PLMN network, an NR base station, or the like. The network device 102 may be a wearable device or a vehicle-mounted device. The network device 102 may also be a communication chip with a communication module.

For example, the network device 102 includes, but is not limited to, a next-generation base station (gNodeB, gNB) in 5G, an evolved node B (eNB) or a radio network controller (RNC) in an LTE system, a node B (NB) in a WCDMA system, a wireless controller or a base station controller (BSC) in a cloud radio access network (CRAN) system, a base transceiver station (BTS) in a GSM system or a CDMA system, a home base station (e.g., home evolved nodeB, or home node B, HNB), a baseband unit (BBU), a transmitting and receiving point (TRP), a transmitting point (TP), a mobile switch center, or the like.

In the eDRX cycle, the UE 101 monitors the PO corresponding to the UE during the paging time window (PTW) period; and does not need to monitor the PO and can be in a sleep state outside the PTW. The UE 101 is to turn on the relevant hardware of radio frequency (RF) and baseband processing to monitor the PO. In the scenario where eDRX is configured, energy consumption may be wasted when the UE 101 keeps monitoring during the PTW period, so the energy saving of UE should be further achieved.

The present disclosure provides a method for transmitting a paging message. Referring to FIG. 2, FIG. 2 is a method for transmitting a paging message according to an exemplary embodiment. As shown in FIG. 2, the method includes steps S201 to S203, specifically as follows.

In step S201, the UE 101 monitors low power wake up signal (LP WUS) through a low power receiver in a first time period of an extended discontinuous reception (e-DRX) cycle.

In some possible implementations, the e-DRX cycle may be configured by the network device 102.

In an example, the e-DRX cycle may be configured between 20.48 seconds (s) and 2.92 hours (h).

In some possible implementations, the first time period may be the entire time period corresponding to the e-DRX cycle, or a partial time period therein.

In some possible implementations, the UE 101 uses a separate low power receiver to monitor the LP WUS, and the power consumption of the low power receiver is much smaller than the power consumption of the main receiver of the UE 101.

In some possible implementations, when the LP WUS is not detected, the main receiver of the UE 101 may be in a sleep state, in which the Physical Downlink Control Channel (PDCCH) is not monitored, for example, the paging Downlink Control Information (paging DCI) is not monitored.

In step S202, the network device 102 sends, during the first time period of the e-DRX cycle, an LP WUS to the UE before sending a paging message.

In some possible implementations, when the network device 102 is to send a paging message, it first wakes up the UE 101 by sending an LP WUS. During the first time period, the UE 101 monitors the LP WUS through the low power transceiver.

In some possible implementations, the network device 102 notifies, by sending the LP WUS, the UE 101 to monitor the Paging Occasion (PO) corresponding to the UE itself.

In step S203, after receiving the LP WUS, the main receiver of the UE 101 switches from the sleep state to the active state and monitors the PO corresponding to the UE.

In some possible implementations, after receiving the LP WUS, the UE 101 wakes up the main receiver to monitor the corresponding PO, so as to receive the paging DCI corresponding to the UE in the search space corresponding to the PO.

According to some embodiments of this disclosure, in the first time period of the e-DRX cycle, when the network device 102 is to send a paging message, it first sends an LP WUS to wake up the UE 101. The UE 101 can monitor the LP WUS by using a low power receiver, then wake up the main receiver after the LP WUS is detected, and monitor the corresponding PO to monitor the paging message. Before the LP WUS is detected, the main receiver can remain in the sleep state, thereby further saving the energy consumption of UE in the e-DRX scenario in combination with the LP WUS mechanism.

The present disclosure provides a method for monitoring a paging message, which is performed by a UE 101. Referring to FIG. 3, FIG. 3 is a method for monitoring a paging message according to an exemplary embodiment. As shown in FIG. 3, the method includes steps S301 to S302, specifically:

In step S301, the UE 101 monitors LP WUS through a low power receiver in a first time period of an e-DRX cycle.

In step S302, after receiving the LP WUS, a main receiver switches from sleep state to active state and monitors a PO corresponding to the UE.

In some possible implementations, the e-DRX cycle may be configured by the network device 102. For example, the e-DRX cycle may be configured to be between 20.48 s and 2.92 h.

In some possible implementations, the first time period may be the entire time period corresponding to the e-DRX cycle, or a partial time period therein.

In some possible implementations, the UE 101 uses a separate low power receiver to monitor the LP WUS, and the power consumption of the low power receiver is much smaller than the power consumption of the main receiver of the UE 101.

In some possible implementations, when the LP WUS is not detected, the main receiver of the UE 101 may be in a sleep state, which does not monitor the paging DCI.

In some possible implementations, POs corresponding to multiple UEs 101 may be configured in one e-DRX cycle, and each UE 101 needs to monitor its own corresponding PO.

According to some embodiments of this disclosure, in the e-DRX cycle, the UE 101 may monitor LP WUS by using the low power receiver, then wake up the main receiver after the LP WUS is detected, and monitor the corresponding PO to monitor the paging message. Before the LP WUS is detected, the main receiver may remain in the sleep state, thereby further saving the energy consumption of UE in the e-DRX scenario in combination with the LP WUS mechanism.

The present disclosure provides a method for monitoring a paging message, which is performed by UE 101. The method includes steps S301 to S302, specifically as follows.

In step S301, the UE 101 monitors the LP WUS through the low power receiver in the first time period of the e-DRX cycle.

In step S302, after receiving the LP WUS, the main receiver switches from sleep state to active state and monitors the PO corresponding to the UE.

The first time period includes: a time period corresponding to a PTW in the e-DRX cycle.

In some possible implementations, only one PTW is configured in one e-DRX cycle.

In some possible implementations, the UE 101 may still monitor the LP WUS through the low power receiver during the PTW period, and the UE 101 may remain in sleep mode before the LP WUS is detected.

According to some embodiments of this disclosure, the UE 101 may first monitor the LP WUS through the low power receiver within the PTW of the e-DRX cycle and, after the LP WUS is detected, wake up the main receiver from the sleep state to monitor the PO, thereby achieving UE energy saving within the PTW period.

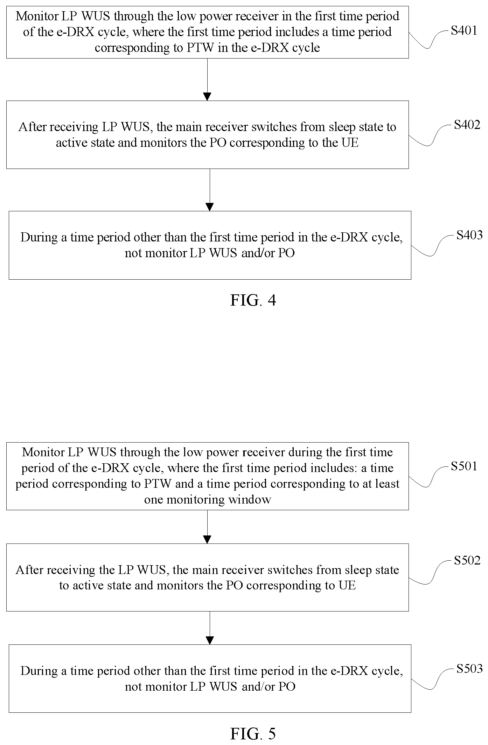

The present disclosure provides a method for monitoring a paging message, which is performed by UE 101. Referring to FIG. 4, FIG. 4 is a method for monitoring a paging message according to an exemplary embodiment. As shown in FIG. 4, the method includes steps S401 to S403, specifically as follows.

In step S401, the UE 101 monitors the LP WUS through the low power receiver in the first time period of the e-DRX cycle, where the first time period includes a time period corresponding to the PTW in the e-DRX cycle.

In step S402, after receiving the LP WUS, the main receiver switches from sleep state to active state and monitors the PO corresponding to the UE.

In step S403, during a time period other than the first time period in the e-DRX cycle, the UE 101 does not monitor LP WUS and/or PO.

The execution order of step S403 is for illustration only and is not intended to be limiting. The operation of the UE 101 outside the PTW period may be before or after step S401.

In some possible implementations, the network device 102 does not schedule any paging message in time periods other than PTW in the e-DRX cycle. Therefore, the UE 101 monitors LP WUS through the low power receiver in the first time period, and monitors PO through the main receiver after LP WUS is detected. In the e-DRX cycle, it does not monitor LP WUS or PO outside the first time period.

According to some embodiments of this disclosure, in combination with the timing of scheduling paging messages by the network device 102, the UE 101 can remain in the sleep state and the low power receiver may not monitor the LP WUS during the time period outside the PTW, thereby further achieving energy saving.

The present disclosure provides a method for monitoring a paging message, which is performed by UE 101. The method includes steps S301 to S302, specifically as follows.

In step S301, the UE 101 monitors the LP WUS through the low power receiver in the first time period of the e-DRX cycle.

In step S302, after receiving the LP WUS, the main receiver switches from sleep state to active state and monitors the PO corresponding to the UE.

The first time period includes a whole duration in the e-DRX cycle.

In some possible implementations, when the network device 102 has requirement of scheduling paging, it first sends the LP WUS to wake up the main receiver of the UE 101.

In some possible implementations, the whole duration in the e-DRX cycle includes: a time period corresponding to the PTW and a time period(s) outside the PTW.

In this implementation, the UE 101 monitors the LP WUS through the low power receiver during the time period corresponding to the PTW and the time period(s) outside the PTW. If the LP WUS is not detected, the main receiver can always remain in sleep state during this duration to save energy.

According to some embodiments of this disclosure, in combination with the LP WUS mechanism, during the entire e-DRX cycle, the UE 101 uses the low power receiver with very low power consumption to monitor the LP WUS, so as to determine whether there is a paging schedule. If the LP WUS is not detected, the main receiver of the UE 101 can remain in the sleep state to achieve energy saving.

The present disclosure provides a method for monitoring a paging message, which is performed by UE 101. The method includes steps S301 to S302, specifically as follows.

In step S301, the UE 101 monitors the LP WUS through the low power receiver in the first time period of the e-DRX cycle.

In step S302, after receiving the LP WUS, the main receiver switches from sleep state to active state and monitors the PO corresponding to the UE.

Here, the first time period includes: a time period corresponding to PTW and a time period corresponding to at least one monitoring window, where the monitoring window is configured for monitoring LP WUS.

In some possible implementations, a monitoring window for monitoring LP WUS is defined.

In some possible implementations, the monitoring window may be defined by a protocol. For example, the protocol may define a time domain position and the number of the monitoring window(s).

In some possible implementations, the monitoring window is configured by the network device 102. For example, the network device 102 configures the time domain position and the number of the monitoring window(s).

In some possible implementations, the at least one monitoring window is located in a period outside the PTW in the e-DRX cycle.

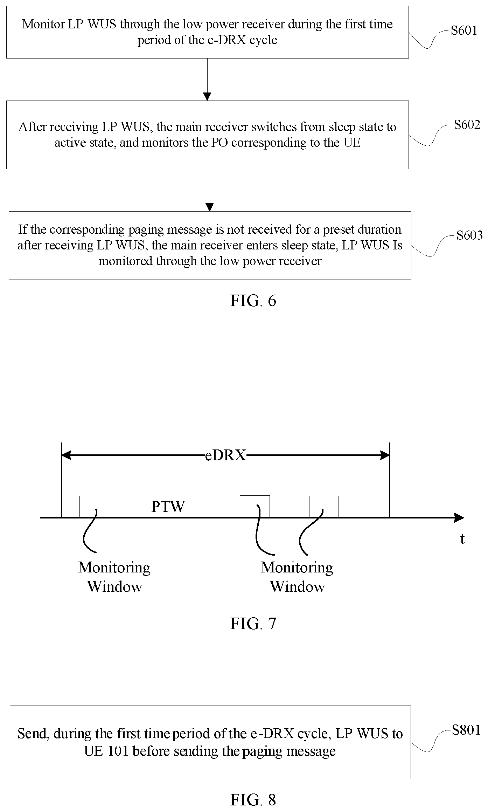

In an example, as shown in FIG. 7, on the time axis, the at least one monitoring window may be located in front of the PTW, or behind the PTW, or may be configured on both sides of the PTW.

In these implementations, the monitoring window(s) is configured outside the PTW, thereby timely meeting the paging scheduling requirements that may exist in the network device 102 without waiting for the PTW period, so as to shorten the data transmission delay. During the monitoring window(s), if the network device 102 has requirement of paging scheduling, it can first send LP WUS to notify the UE 101 to monitor PO.

According to some embodiments of this disclosure, the UE 101 uses the low power receiver to monitor the LP WUS during the time period corresponding to the PTW and during the time period corresponding to at least one monitoring window. This embodiment is applicable to the scenario where the network device 102 has paging scheduling requirement outside the PTW, where paging scheduling can be performed through the configured monitoring window. The UE 101 monitors the LP WUS in the monitoring window without waiting until the PTW period, thereby being beneficial to reducing the data transmission delay on the basis of energy saving.

The present disclosure provides a method for monitoring a paging message, which is performed by UE 101. Referring to FIG. 5, FIG. 5 is a method for monitoring a paging message according to an exemplary embodiment. As shown in FIG. 5, the method includes steps S501 to S503, specifically as follows.

In step S501, the UE 101 monitors the LP WUS through the low power receiver during the first time period of the e-DRX cycle.

Here, the first time period includes: a time period corresponding to the PTW and a time period corresponding to at least one monitoring window, where the monitoring window is configured for monitoring the LP WUS.

In step S502, after receiving the LP WUS, the main receiver of the UE 101 switches from the sleep state to the active state, and monitors the PO corresponding to the UE 101.

In step S503, during a time period other than the first time period in the e-DRX cycle, the UE 101 does not monitor LP WUS and/or PO.

The execution order of step S503 is for illustration only and is not limiting. Depending on the location of the first time period, step S503 may be executed before or after step S501.

In some possible implementations, the UE 101 may not monitor the LP WUS or the PO in the time period other than the first time period. Alternatively, the UE 101 monitors the LP WUS in the time period other than the first time period in the e-DRX cycle, and does not need to monitor the PO when the LP WUS is not detected.

In some possible implementations, when there is a need for scheduling paging, the network device 102 first sends the LP WUS to wake up the UE 101.

According to some embodiments of this disclosure, in a scenario where a monitoring window is configured, the UE 101 may monitor the LP WUS during the monitoring window and the time period corresponding to the PTW, but no longer monitor the LP WUS during other time periods of the e-DRX cycle, so as to further achieve energy saving.

The present disclosure provides a method for monitoring a paging message, which is performed by UE 101. The method includes steps S500 to S503, specifically as follows.

In step S500, the UE 101 receives configuration information sent by the network device 102, where the configuration information is used for configuring at least one monitoring window.

In step S501, the UE 101 monitors the LP WUS through the low power receiver during the first time period of the e-DRX cycle.

Here, the first time period includes: a time period corresponding to the PTW and a time period corresponding to at least one monitoring window, where the monitoring window is configured for monitoring the LP WUS.

In step S502, after receiving the LP WUS, the main receiver of the UE 101 switches from the sleep state to the active state, and monitors the PO corresponding to the UE 101.

In step S503, during a time period other than the first time period in the e-DRX cycle, the UE 101 does not monitor LP WUS and/or PO.

In some possible implementations, the network device 102 may send the configuration information via Radio Resource Control (RRC) signaling.

In some possible implementations, the configuration information includes at least one of the following:
a start time of the at least one monitoring window;
a duration of the at least one monitoring window; and
the number of monitoring windows.

In this implementation, the configuration information may indicate the start time (offset) of the monitoring window in each e-DRX cycle. The UE 101 may know the timing to start monitoring the LP WUS according to the start time of the monitoring window.

In some implementations, when there are multiple monitoring windows, the durations of the monitoring windows may be the same or different.

In some implementations, the number of monitoring windows may be greater than or equal to 1.

In some possible implementations, the number of monitoring windows may also be defined by a protocol. For example, the protocol defines that there is only 1 monitoring window in the period outside the PTW of the e-DRX cycle.

According to some embodiments of this disclosure, the UE 101 can obtain the monitoring window configured by the network device 102 based on the configuration information of the network device 102, so that the LP WUS can be monitored in each monitoring window, and the corresponding PO can be monitored in a timely manner on the basis of energy saving.

The present disclosure provides a method for monitoring a paging message, which is performed by UE 101. Referring to FIG. 6, FIG. 6 is a method for monitoring a paging message according to an exemplary embodiment. As shown in FIG. 6, the method includes steps S601 to S603, specifically as follows.

In step S601, the UE 101 monitors the LP WUS through the low power receiver during the first time period of the e-DRX cycle.

In step S602, after receiving the LP WUS, the main receiver of the UE 101 switches from the sleep state to the active state, and monitors the PO corresponding to the UE 101.

In step S603, if the UE 101 does not receive the corresponding paging message for a preset duration after receiving the LP WUS, the main receiver enters the sleep state and LP WUS is monitored through the low power receiver.

In some possible implementations, the first time period includes: a time period corresponding to the PTW in the e-DRX cycle.

In some possible implementations, the first time period includes: the whole duration of the e-DRX cycle.

In some possible implementations, the first time period includes: a time period corresponding to the PTW and a time period corresponding to at least one monitoring window, where the monitoring window is configured for monitoring the LP WUS.

In some possible implementations, within the preset duration after receiving the LP WUS, the main receiver is in the active state to monitor PO.

In some possible implementations, if the corresponding paging message is not received in the preset duration after receiving the LP WUS, the main receiver can enter the sleep state again and monitor the LP WUS through the low power receiver.

In an example, if the corresponding paging message is not received in the preset duration after receiving the LP WUS, it indicates that the UE 101 may be mistakenly awakened.

In an example, if the corresponding paging message is not received in the preset duration after receiving the LP WUS, it indicates that the monitoring configuration of the LP WUS does not match the PO configuration corresponding to the UE 101.

According to some embodiments of this disclosure, if the corresponding paging message is not received in the preset duration after the UE 101 receives the LP WUS, the UE 101 can adjust the energy-saving state in time, still uses the low power receiver to monitor the LP WUS, and put the main receiver into the sleep state to achieve energy saving.

The present disclosure provides a method for sending a paging message, which is performed by the network device 102. Referring to FIG. 8, FIG. 8 is a method for sending a paging message according to an exemplary embodiment. As shown in FIG. 8, the method includes step S801, specifically as follows.

In step S801, during the first time period of the e-DRX cycle, the network device 102 sends an LP WUS to the UE 101 before sending a paging message.

In some possible implementations, the e-DRX cycle can be configured ranging 20.48 s to 2.92 h.

In some possible implementations, the first time period may be the entire time period corresponding to the e-DRX cycle, or a partial time period therein.

According to some embodiments of this disclosure, in the e-DRX cycle, the network device 102 first sends the LP WUS to wake up the UE 101 before sending the paging message. The UE 101 can use the low power receiver to monitor the LP WUS; and before receiving the LP WUS, the main receiver of the UE 101 can remain in the sleep state, thereby further saving the energy consumption of UE in the e-DRX scenario in combination with the LP WUS mechanism.

The present disclosure provides a method for sending a paging message, which is performed by the network device 102. The method includes steps S801 to S802, specifically as follows.

In step S801, during the first time period of the e-DRX cycle, the network device 102 sends the LP WUS to the UE 101 before sending the paging message.

In step S802, LP WUS and/or paging information is not sent during a time period other than the first time period in the e-DRX cycle.

In some possible implementations, the paging information includes a paging DCI and a paging message scheduled by the paging DCI.

In some possible implementations, the first time period may be the entire time period corresponding to the e-DRX cycle, or a partial time period therein.

In some possible implementations, the network device 102 does not send any paging message during the time period other than the first time period, and does not need to send the LP WUS to wake up the UE 101. In this implementation, the UE 101 may not monitor the LP WUS and PO during the time period other than the first time period.

In some possible implementations, the UE 101 may monitor the LP WUS outside the first time period to obtain possible temporary scheduling in a timely manner; or may not monitor the LP WUS to further save energy consumption.

According to some embodiments of this disclosure, the network device 102 only schedules the paging message within the first time period, and sends LP WUS to wake up the UE 101 before sending the paging message. There is no need to wake up the UE 101 outside the first time period, thereby being beneficial to further energy saving of the network device 102.

Embodiments of the present disclosure provide a method for sending a paging message, which is performed by the network device 102. The method includes step S801, or the method includes steps S801 to S802, where the first time period includes one of the following:
a whole duration of the e-DRX cycle;
a time period corresponding to a PTW in the e-DRX cycle; and
a time period corresponding to the PTW and a time period corresponding to at least one monitoring window, where the monitoring window is configured for monitoring the LP WUS.

In some possible implementations, only one PTW is configured in one e-DRX cycle.

In some possible implementations, during the first time period, if the network device 102 has a need to schedule paging, it first sends an LP WUS. Before the UE 101 receives the LP WUS, the main receiver can be kept in the sleep state to achieve energy saving.

In some possible implementations, outside the first time period, the network device 102 may not perform paging scheduling, and the UE 101 may keep the main receiver in the sleep state to save energy.

In some possible implementations, at least one monitoring window is located in the time period outside the PTW in the e-DRX cycle.

In an example, as shown in FIG. 7, on the time axis, at least one monitoring window may be located in front of the PTW, or behind the PTW, or may be configured on both sides of the PTW.

In these implementation, the monitoring window is configured outside the PTW, thereby timely meeting the paging scheduling requirements that may exist in the network device 102 without waiting for the PTW period, so as to shorten the data transmission delay. During the monitoring window(s), if the network device 102 has requirement of paging scheduling, it can first send LP WUS to notify the UE 101 to monitor PO.

In some possible implementations, the method may further include the following step S800.

In step S800, the network device 102 sends configuration information to the UE 101, where the configuration information is used for configuring at least one monitoring window.

Here, step S800 may be performed before step S801.

In some possible implementations, the configuration information includes at least one of the following:
a start time of the at least one monitoring window;
a duration of the at least one monitoring window; and
the number of monitoring windows.

In these implementations, the network device 102 notifies, through the configuration information, the UE 101 of the timing to monitor the LP WUS, so that the UE 101 can monitor the LP WUS at a suitable timing, thereby being beneficial for timely obtaining its corresponding paging message on the basis of energy saving.

Based on the same concept as the above method embodiments, embodiments of the present disclosure also provide an apparatus for monitoring a paging message, which can have the functions of the UE 101 in the above method embodiments, and can be configured to implement the steps performed by the UE 101 according to the above method embodiments. The functions can be implemented by hardware, or by software, or by hardware executing corresponding software. The hardware or software includes one or more modules corresponding to the above functions.

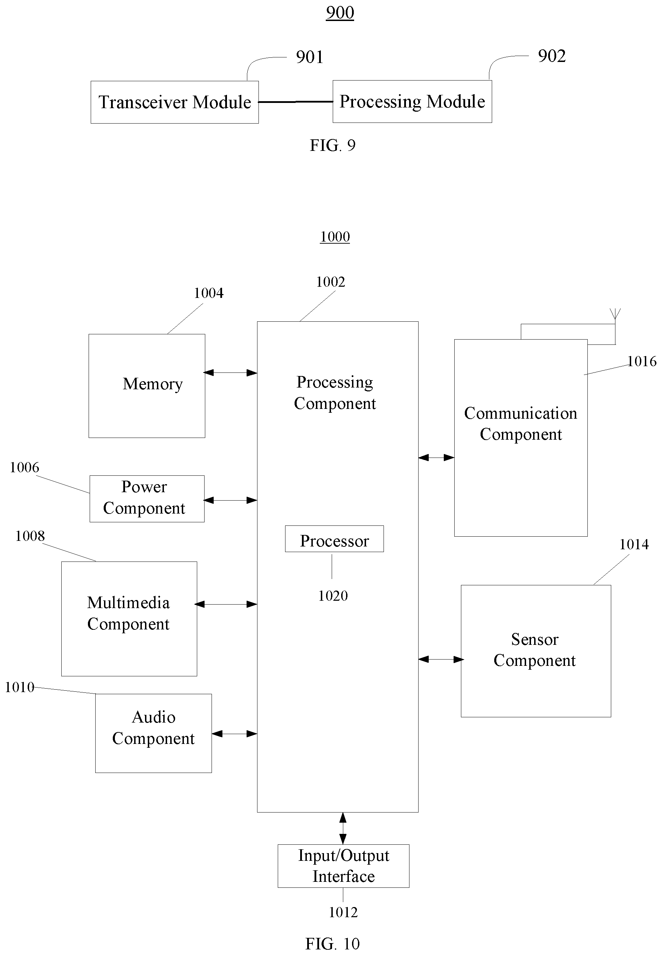

In a possible implementation, the apparatus 900 shown in FIG. 9 may serve as the UE 101 involved in the above method embodiments, and implemented the steps performed by the UE 101 in the above method embodiments. As shown in FIG. 9, the apparatus 900 may include a transceiver module 901 and a processing module 902 coupled to each other, where the transceiver module 901 can be configured to support communication of a communication device, and the processing module 902 can be configured for the communication device to perform processing operations, such as generating information/messages to be sent, or processing received signals to obtain information/messages.

When implementing the steps performed by the UE 101, the transceiver module 901 is configured to monitor, in a first time period of an e-DRX cycle, LP WUS through a low power receiver; and
the processing module 902 is configured to monitor a PO corresponding to the UE through a main receiver switched, after receiving the LP WUS, from a sleep state to an active state.

When the apparatus for receiving configuration information is UE 101, its structure may be as shown in FIG. 10. The apparatus 1000 may be a mobile phone, a computer, a digital broadcast terminal, a messaging device, a game console, a tablet device, a medical device, a fitness device, a personal digital assistant, or the like.

Referring to FIG. 10, the apparatus 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 generally controls the overall operation of the apparatus 1000, such as operations associated with display, phone calls, data communications, camera operations, and recording operations. The processing component 1002 may include one or more processors 1020 to execute instructions to complete all or part of the steps of the method as described above. In addition, the processing component 1002 may include one or more modules to facilitate the interaction between the processing component 1002 and other components. For example, the processing component 1002 may include a multimedia module to facilitate the interaction between the multimedia component 1008 and the processing component 1002.

The memory 1004 is configured to store various types of data to support operations on the apparatus 1000. Examples of such data include instructions for any application or method operating on the apparatus 1000, contact data, phone book data, messages, pictures, videos, and the like. The memory 1004 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 1006 provides power to the various components of the apparatus 1000. The power component 1006 may include a power management system, one or more power supplies, and other components associated with generating, managing, and distributing power for the apparatus 1000.

The multimedia component 1008 includes a screen that provides an output interface between the apparatus 1000 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 1008 includes a front camera and/or a rear camera. When the apparatus 1000 is in an operating mode, such as a shooting mode or a video mode, the front camera and/or the rear camera may receive external multimedia data. Each front camera and the rear camera may be a fixed optical lens system or have a focal length and optical zoom capability.

The audio component 1010 is configured to output and/or input audio signals. For example, the audio component 1010 includes a microphone (MIC), and when the apparatus 1000 is in an operating mode, such as a call mode, a recording mode, and a speech recognition mode, the microphone is configured to receive an external audio signal. The received audio signal can be further stored in the memory 1004 or sent via the communication component 1016. In some embodiments, the audio component 1010 also includes a speaker for outputting audio signals.

Input/output interface 1012 provides an interface between processing component 1002 and peripheral interface modules, such as keyboards, click wheels, buttons, etc. These buttons may include, but are not limited to, a home button, a volume button, a start button, and a lock button.

The sensor component 1014 includes one or more sensors for providing various aspects of status assessment for the apparatus 1000. For example, the sensor component 1014 can detect the open/closed state of the apparatus 1000, the relative positioning of components, such as the display and keypad of the apparatus 1000. The sensor component 1014 can also detect the position change of the apparatus 1000 or a component of the apparatus 1000, the presence or absence of user contact with the apparatus 1000, the orientation or acceleration/deceleration of the apparatus 1000, and the temperature change of the apparatus 1000. The sensor component 1014 may include a proximity sensor configured to detect the presence of nearby objects without any physical contact. The sensor component 1014 may also include an optical sensor, such as a CMOS or CCD image sensor, for use in imaging applications. In some embodiments, the sensor component 1014 may also include an acceleration sensor, a gyroscope sensor, a magnetic sensor, a pressure sensor, or a temperature sensor.

The communication component 1016 is configured to facilitate wired or wireless communication between the apparatus 1000 and other devices. The apparatus 1000 can access a wireless network based on a communication standard, such as WiFi, 2G, 3G, or the like, or a combination thereof. In an exemplary embodiment, the communication component 1016 receives a broadcast signal or broadcast-related information from an external broadcast management system via a broadcast channel. In an exemplary embodiment, the communication component 1016 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the apparatus 1000 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the method as described above.

In an exemplary embodiment, a non-transitory computer-readable storage medium including instructions is also provided, such as the memory 1004 including instructions, where the instructions can be executed by the processor 1020 of the apparatus 1000 to perform the method as described above. For example, the non-transitory computer-readable storage medium can be a ROM, a random access memory (RAM), a CD-ROM, a magnetic tape, a floppy disk, an optical data storage device, or the like.

Based on the same concept as the above method embodiments, embodiments of the present disclosure also provide an apparatus for sending a paging message, which can have the function of the network device 102 in the above method embodiments, and can be configured to implement the steps performed by the network device 102 according to the above method embodiments. The function can be implemented by hardware, or by software, or by hardware executing corresponding software. The hardware or software includes one or more modules corresponding to the above functions.

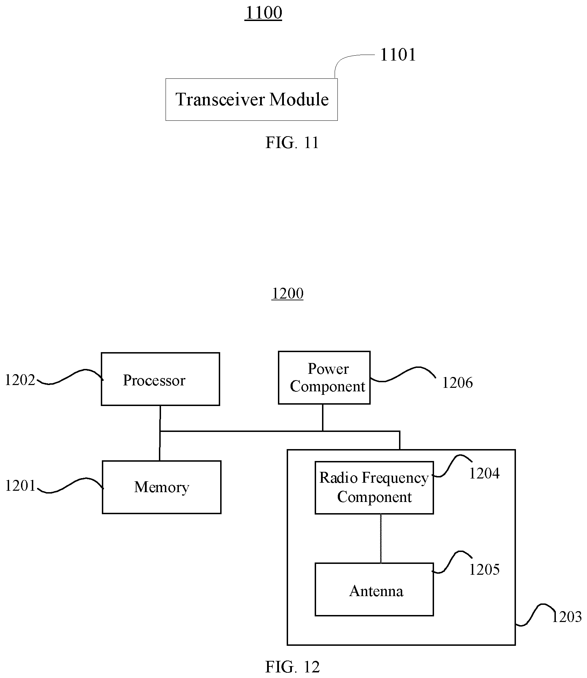

In a possible implementation, the communication device 1100 shown in FIG. 11 may serve as the network device 102 involved in the above method embodiments, and implement the steps performed by the network device 102 in the above method embodiments. As shown in FIG. 11, the communication device 1100 may include a transceiver module 1101, where the transceiver module 1101 may be configured to support communication of the communication device.

When performing the steps implemented by the network device 102, the transceiver module 1101 is configured to send, in a first time period of an e-DRX cycle, LP WUS to UE before sending the paging message.

When the communication device is a network device 102, its structure can also be shown in FIG. 12. Take the base station as an example to illustrate the structure of the communication device. As shown in FIG. 12, the device 1200 includes a memory 1201, a processor 1202, a transceiver component 1203, and a power component 1206. In some embodiments, the memory 1201 is coupled to the processor 1202, and can be configured to store the programs and data necessary for the communication device 1200 to implement various functions. The processor 1202 is configured to support the communication device 1200 to perform the corresponding functions in the above methods, and the functions can be implemented by calling the program stored in the memory 1201. The transceiver component 1203 can be a wireless transceiver, which can be configured to support the communication device 1200 to receive signaling and/or data through a wireless air interface, and send signaling and/or data. The transceiver component 1203 may also be referred to as a transceiver unit or a communication unit. The transceiver component 1203 may include a radio frequency component 1204 and one or more antennas 1205, where the radio frequency component 1204 may be a remote radio unit (RRU), and may be specifically used for transmission of radio frequency signals and conversion of radio frequency signals into baseband signals; and the one or more antennas 1205 may be specifically used for radiation and reception of radio frequency signals.

When the communication device 1200 is to send data, the processor 1202 can perform baseband processing on the data to be sent, and then output the baseband signal to the RF unit. The RF unit performs RF processing on the baseband signal and then sends the RF signal in the form of electromagnetic waves through the antenna. When data is sent to the communication device 1200, the RF unit receives the RF signal through the antenna, converts the RF signal into a baseband signal, and outputs the baseband signal to the processor 1202. The processor 1202 converts the baseband signal into data and processes the data.

Those skilled in the art will readily appreciate other implementations of the disclosed embodiments after considering the specification and practicing the invention disclosed herein. The present disclosure is intended to cover any variations, uses, or adaptations of the disclosed embodiments that follow the general principles of the disclosed embodiments and include common knowledge or customary technical means in the art that are not disclosed in the present disclosure. The specification and examples are to be considered as exemplary only, and the true scope and spirit of the disclosed embodiments are indicated by the following claims.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

### Industrial Applicability

In the method disclosed herein, in the e-DRX cycle, the UE may monitor LP WUS by using the low power receiver, then wake up the main receiver after the LP WUS is detected, and monitor the corresponding PO to monitor the paging message. Before the LP WUS is detected, the main receiver may remain in the sleep state, thereby further saving the energy consumption of UE in the e-DRX scenario in combination with the LP WUS mechanism.

## Claims

1. A method for monitoring a paging message, performed by user equipment UE, comprising:
monitoring, in a first time period of an extended discontinuous reception e-DRX cycle, low power wake up signal LP WUS through a low power receiver; and
monitoring a paging opportunity PO corresponding to the UE through a main receiver switched, after receiving the LP WUS, from a sleep state to an active state.

2. The method according to claim 1, wherein,
the first time period comprises: a time period corresponding to a paging time window PTW in the e-DRX cycle.

3. The method according to claim 1, wherein,
the first time period comprises: a whole duration of the e-DRX cycle.

4. The method according to claim 1, wherein,
the first time period comprises: a time period corresponding to a PTW and a time period corresponding to at least one monitoring window, wherein the monitoring window is configured for monitoring the LP WUS.

5. The method according to claim 4, wherein the at least one monitoring window is located in a time period of the e-DRX cycle outside the PTW.

6. The method according to any one of claims 1 to 5, further comprising:
not monitoring the LP WUS and/or the PO in any time period of the e-DRX cycle other than the first time period.

7. The method according to claim 5, further comprising:
receiving configuration information sent by a network device, wherein the configuration information is used for configuring the at least one monitoring window.

8. The method according to claim 7, wherein the configuration information comprises at least one of following:
a start time of the at least one monitoring window;
a duration of the at least one monitoring window;
a number of monitoring window.

9. The method according to any one of claims 1 to 8, wherein monitoring the PO corresponding to the UE comprises:
if the UE does not receive a corresponding paging message for a preset duration after receiving the LP WUS, causing the main receiver to enter the sleep state and monitoring the LP WUS through the low power receiver.

10. A method for sending a paging message, performed by a network device, comprising:
sending, in a first time period of an extended discontinuous reception e-DRX cycle, low power wake up signal LP WUS to user equipment UE before sending the paging message.

11. The method according to claim 10, further comprising:
not sending the LP WUS and/or the paging information in any time period of the e-DRX cycle other than the first time period.

12. The method according to claim 10 or 11, wherein the first time period comprises one of following:
a whole duration of the e-DRX cycle;
a time period corresponding to a paging time window PTW in the e-DRX cycle;
a time period corresponding to the PTW and a time period corresponding to at least one monitoring window, wherein the monitoring window is configured for monitoring the LP WUS.

13. The method according to claim 12, wherein the at least one monitoring window is located in a time period of the e-DRX cycle outside the PTW.

14. The method according to claim 12 or 13, further comprising:
sending configuration information to the UE, wherein the configuration information is used for configuring the at least one monitoring window.

15. The method according to claim 14, wherein the configuration information comprises at least one of following:
a start time of the at least one monitoring window;
a duration of the at least one monitoring window;
a number of monitoring window.

16. An apparatus for monitoring a paging message, provided in user equipment UE, comprising:
a transceiver module, configured to monitor, in a first time period of an extended discontinuous reception e-DRX cycle, low power wake up signal LP WUS through a low power receiver; and
a processing module, configured to monitor a paging opportunity PO corresponding to the UE through a main receiver switched, after receiving the LP WUS, from a sleep state to an active state.

17. An apparatus for sending a paging message, provided in user equipment UE, comprising:
a transceiver module, configured to send, in a first time period of an extended discontinuous reception e-DRX cycle, low power wake up signal LP WUS to user equipment UE before sending the paging message.

18. A communication device, comprising a processor and a memory, wherein,
the memory is configured to store a computer program; and
the processor is configured to execute the computer program to implement the method according to any one of claims 1 to 9.

19. A communication device, comprising a processor and a memory, wherein,
the memory is configured to store a computer program; and
the processor is configured to execute the computer program to implement the method according to any one of claims 10 to 15.

20. A computer readable storage medium storing instructions thereon, wherein the instructions, upon being called and executed on a computer, cause the computer to implement the method according to any one of claims 1 to 9.

21. A computer readable storage medium storing instructions thereon, wherein the instructions, upon being called and executed on a computer, cause the computer to implement the method according to any one of claims 10 to 15.
